Europäisches Patentamt

European Patent Office

Office européen des brevets

(19)

(11) Veröffentlichungsnummer : **0 316 832 B1**

(12)

# EUROPÄISCHE PATENTSCHRIFT

(45) Veröffentlichungstag der Patentschrift :
02.10.91 Patentblatt 91/40

(51) Int. Cl.$^5$ : **B60S 1/24, F16D 1/06**

(21) Anmeldenummer : 88118914.6

(22) Anmeldetag : 12.11.88

(54) Getriebeteil für eine Wischanlage von Kraftfahrzeugen und Verfahren zu dessen Herstellung.

(30) Priorität : 17.11.87 DE 3738924

(43) Veröffentlichungstag der Anmeldung :
24.05.89 Patentblatt 89/21

(45) Bekanntmachung des Hinweises auf die
Patenterteilung :
02.10.91 Patentblatt 91/40

(84) Benannte Vertragsstaaten :
ES FR GB IT SE

(56) Entgegenhaltungen :
BE-A- 902 964
DE-A- 3 045 395
DE-A- 3 241 551
PATENT ABSTRACTS OF JAPAN, Band 5, Nr.
183 (M-97)[855], 21. November 1981; & JP-A-56
105 120 (HITACHI SEISAKUSHO K.K.) 21-
08-1981
PATENT ABSTRACTS OF JAPAN, Band 9, Nr.
231 (M-414)[1954], 18. September 1985; &
JP-A-60 88 663 (NIPPON DENSO K.K.) 18-
05-1985

(73) Patentinhaber : SWF Auto-Electric GmbH
Stuttgarter Strasse 119 Postfach 135
W-7120 Bietigheim-Bissingen (DE)

(72) Erfinder : Bauer, Kurt
Wolfsgrubenstrasse 21
W-7121 Ingersheim 2 (DE)
Erfinder : Dörr, Wilhelm
Paul-Bühler-Strasse 7
W-7120 Bietigheim-Bissingen (DE)
Erfinder : Edele, Reinhard
Metterzimmererstrasse 23
W-7123 Sachsenheim (DE)
Erfinder : Pfitzenmaier, Werner
Christoph-Schrempf-Strasse 20
W-7122 Besigheim (DE)
Erfinder : Roth, Christian
Reichenberger Strasse 23
W-7120 Bietigheim-Bissingen (DE)
Erfinder : Schmid, Eckhardt
Heilbronner Strasse 62
W-7129 Brackenheim (DE)

**Beschreibung**

Die Erfindung bezieht sich auf ein Getriebeteil für eine Wischanlage von Kraftfahrzeugen gemäß den Merkmalen des Oberbegriffs des Anspruchs 1 (siehe die DE-A-3241551).

Bei Scheibenwischeranlagen von Kraftfahrzeugen werden mehrere Getriebeteile benötigt, über die die Drehbewegung eines Elektromotors in eine Pendelbewegung eines Scheibenwischers umgesetzt wird. Dabei besteht allgemein das Problem der drehfesten Fixierung eines ersten Elementes an einem Hebel oder einer Kurbel, wobei der Befestigungsbereich des ersten Elementes in einer entsprechenden Ausnehmung des Hebels steckt und dort verankert ist. Bei dem ersten Element kann es sich beispielsweise um eine Wischerwelle oder auch um einen Gelenkbolzen, insbesondere einen Kugelgelenkbolzen handeln.

Aus der DE-A 3045395 ist bereits ein Getriebeteil für Scheibenwischeranlagen bekannt, bei dem ein Antriebshebel in einem mittleren Befestigungsbereich an einer Wischerwelle fixiert ist. Von der einen Seite dieses Antriebshebels steht dann der Befestigungsabschnitt für den Wischarm ab, der üblicherweise mit einem Gewindeabschnitt und einer Rändelung versehen ist. Auf der anderen Seite des Antriebshebels steht ein Lagerabschnitt der Wischerwelle ab, der in einer Lagerbuchse drehbar gelagert ist. Um eine formstabile und drehfeste Verbindung zwischen dem Antriebshebel und der Wischerwelle zu schaffen, hat bei einer bekannten Ausführung die Wischerwelle einen vorstehenden profilierten Abschnitt, der in eine entsprechende Ausnehmung im Antriebshebel eingepreßt ist. Zur Sicherung in axialer Richtung sind dann aus diesem profilierten Abschnitt Anschlagschultern herausgestaucht, die als Halteelement für den Antriebshebel dienen. Wegen dieses profilierten Abschnittes im Mittelbereich der Wischwelle ist die Herstellung eines solchen Getriebeteils verhältnismäßig teuer.

Es sind auch Getriebeteile mit einem an einem Hebel verankerten Doppelkugelbolzen zur Anlenkung an weitere Getriebeteile, beispielsweise Schubstangen bekannt. Dieser Gelenkbolzen wurde bisher im Befestigungsbereich mit dem Hebel verlötet.

Die DE-A 3241551 zeigt in Figur 14 einen Bolzen mit zwei äußeren Abschnitten, auf die Kugeln aufgeschoben sind, und mit einem mittleren, gerändelten Abschnitt, an dem ein Hebel befestigt ist. Der gerändelte Abschnitt ist durch eine Ringnut unterbrochen, in die ein kugelförmiges oder ringförmiges Element eingebracht ist. Um was es sich dabei handelt und welchem Zweck das ringförmige Element dient, ist in der Druckschrift mit keinem Wort erwähnt. Auch wie dieses ringförmige Element in die gezeigte Lage gekommen sein könnte, beibt völlig rätselhaft. Liegt es nämlich anfänglich in der Ringnut des Bolzens, so wird es beim Aufsetzen des Hebels zwangsläufig vom Hebel mitgenommen und gegen den Flansch des Bolzens gedrückt. Liegt es dagegen anfänglich in der Ringnut des Hebels, so wird es vom Absatz des Bolzens vor dem gerändelten Abschnitt mitgenommen.

Deshalb ist der Figur 14 der DE-A-3241551 nichts weiter zu entnehmen, als daß ein Doppelkugelbolzen in einem zwischen den beiden Kugelbolzen liegenden Bereich an einem Hebel befestigt ist.

Aufgabe der Erfindung ist es, ein Getriebeteil für eine Wischanlage von Kraftfahrzeugen, das die Merkmale aus dem Oberbegriff des Anspruchs 1 aufweist, so zu gestalten, daß die Verbindung zwischen dem ersten Element und dem Hebel sehr fest ist und allen in Wischeranlagen auftretenden Kräften standhalten kann.

Diese Aufgabe wird durch ein Getriebeteil mit den Merkmalen aus dem Anspruch 1 gelöst.

Die Verbindung zwischen dem ersten Element und dem Hebel des Getriebeteils wird also durch einfaches Eindrücken von Material des Hebels in die Ringnut des ersten Elements hergestellt.

Beim Eindrücken von Material in die sich innerhalb der Rändelung des Befestigungsbereichs des ersten Elements befindliche Ringnut gelangt Material des Hebels auch tiefer zwischen die einzelnen Zähne des gerändelten Abschnitts zwischen der Ringnut und der geprägten Stirnseite des Hebels. Dadurch wird eine besonders feste Verbindung zwischen dem ersten Element und dem Hebel erhalten, die allen an Wischeranlagen gestellten Anforderungen in hervorragender Weise genügt.

Vorteilhafte Ausgestaltungen eines erfindungsgemäßen Getriebeteils für eine Wischeranlage an Kraftfahrzeugen kann man den Unteransprüchen entnehmen.

Eine besonders stabile Verbindung wird dabei dann erreicht, wenn anstelle einzelner Halteelemente ein umlaufender Wulst gebildet wird, der annähernd radial in die Ringnut der Wischerwelle bzw. des Gelenkbolzens eingreift. Ein solcher ringförmiger Wulst kann durch eine sogenannte Ringverstemmung gebildet werden, bei der mittels eines ringförmigen Prägestempels in die Stirnfläche des Hebels eine ringförmige Aussparung eingearbeitet wird, wobei durch die Prägung dieser Aussparung Material aus der Mantelfläche am Rand der Aussparung herausgedrängt wird. Dieses aus der Mantelfläche herausgedrängte Material fließt dann in die Ringnut hinein, die vorzugsweise einen halbkreisförmigen Querschnitt aufweist, damit an dieser Stelle nicht aufgrund einer Kerbwirkung die Stabilität geschwächt wird.

Versuche haben gezeigt, daß mit einem derart in eine Ringnut der Wischerwelle oder des Gelenkbolzens eingreifenden Halteelement eine ausreichende Stabilität der Verbindung in Achsrichtung gewährleistet ist.

Dennoch ist bei einem bevorzugten Ausführungsbeispiel and der Wischerwelle bzw. dem Gelenkbolzen ein Auflageflansch vorgesehen, an der der Hebel mit einer Stirnfläche anliegt. Dieser Auflageflansch grenzt bei einer Wischerwelle gewissermaßen den Lagerabschnitt von dem Befestigungsbereich für den Hebel ab, wobei folglich der Durchmesser der Wischerwelle im Lagerabschnitt größer ist als in den beiden übrigen Abschnitten bzw. Bereichen. Bei einer solchen Ausführung wird die ringförmige Aussparung in die Stirnseite des Hebels eingearbeitet, die nicht am Auflageflansch anliegt. Dies hat den Vorteil, daß der Auflageflansch bei dem Prägevorgang als Gegenlager ausgenutzt werden kann. Außerdem ist man bei der Festlegung des Durchmessers des Prägestempels nicht von dem größeren Durchmesser des Wischerwellenlagerabschnittes abhängig.

Die Größe des übertragbaren Drehmomentes ist unter anderem abhängig von der axialen Ausdehnung der Rändelung, die jedoch bevorzugt kleiner ist als die Materialstärke des Hebels, damit nicht beim Einpreßvorgang Späne abgeschabt werden, die später über den Hebel hervorstehen. Optimale Verhältnisse hat man dadurch erreicht, daß man die Ringnut innerhalb dieses gerändelten Bereiches vorgesehen hat, so daß also beidseits der Ringnut gerändelte Bereiche existieren, die jedoch eine unterschiedlich große Ausdehnung aufweisen. Damit hat man eine maximal mögliche axiale Länge der Rändelung, andererseits aber auch einen ausreichenden Abstand der Ringnut von der einen Stirnseite des Hebels gewährleistet.

Die Erfindung bezieht sich außerdem auf ein Verfahren zur Herstellung eines solchen Getriebeteils, das im wesentlichen dadurch gekennzeichnet ist, daß die vorzugsweise als Vollwelle ausgebildete Wischerwelle bzw. der Gelenkbolzen mit dem gerändelten Befestigungsbereich in eine Ausnehmung am Hebel eingesteckt, vorzugsweise eingepreßt wird, und daß anschließend an einer Stirnseite des Hebels ein Werkzeug mit einem konzentrisch zur Wischerwelle bzw. dem Gelenkbolzen angeordneten Prägestempel angesetzt wird, der in Achsrichtung der Wischerwelle bzw. des Gelenkbolzens eine ringförmige Aussparung in den Hebel einarbeitet und durch entsprechende Materialverdrängung einen radial in die Ringnut der Wischerwelle bzw. des Gelenkbolzens eindringenden Wulst erzeugt. Die beiden Arbeitsgänge — Aufpressen des Hebels auf die Wischerwelle bzw. den Gelenkbolzen und Bildung des Wulstes zur axialen Lagesicherung — erfolgen also in der gleichen Richtung, was den Montagevorgang vereinfacht und damit auch die Herstellkosten reduziert.

Die Erfindung und deren vorteilhafte Ausgestaltungen werden nachstehend in anhand des in der Zeichnung dargestellten Ausführungsbeispiels näher erläutert. Es zeigen :

Fig. 1     eine Seitenansicht auf ein Getriebeteil,

Fig. 2     eine Ansicht in Pfeilrichtung P,

Fig. 3     in vergrößertem Maßschnitt einen Ieilschnitt im Verbindungsbereich zwischen Hebel und Wischerwelle,

Fig. 4     einen Schnitt durch ein Getriebteil mit einem Gelenkbolzen und

Fig. 5     einen Teilschnitt durch ein weiteres Getriebeteil.

Die insgesamt mit 10 bezeichnete Wischerwelle hat einen Lagerabschnitt 11, einen Befestigungsbereich 12 und einen Befestigungsabschnitt 13 für einen nicht näher dargestellten Wischarm. Dieser Befestigungsabschnitt 13 hat in bekannter Weise einen Rändelkonus 14 und daran anschließend einen Gewindeabschnitt 15 für eine nicht näher dargestellte Befestigungsmutter.

Mit dieser Wischerwelle 10 ist drehfest ein Hebel 20 verbunden, an dessen freiem Ende zwei Kugelbolzen 21 fixiert sind, an die üblicherweise ein nicht näher dargestelltes Gestängeteil angelenkt wird. Außerdem hat der Hebel 20 eine Ausnehmung 22 zur Aufnahme der Wischerwelle 10.

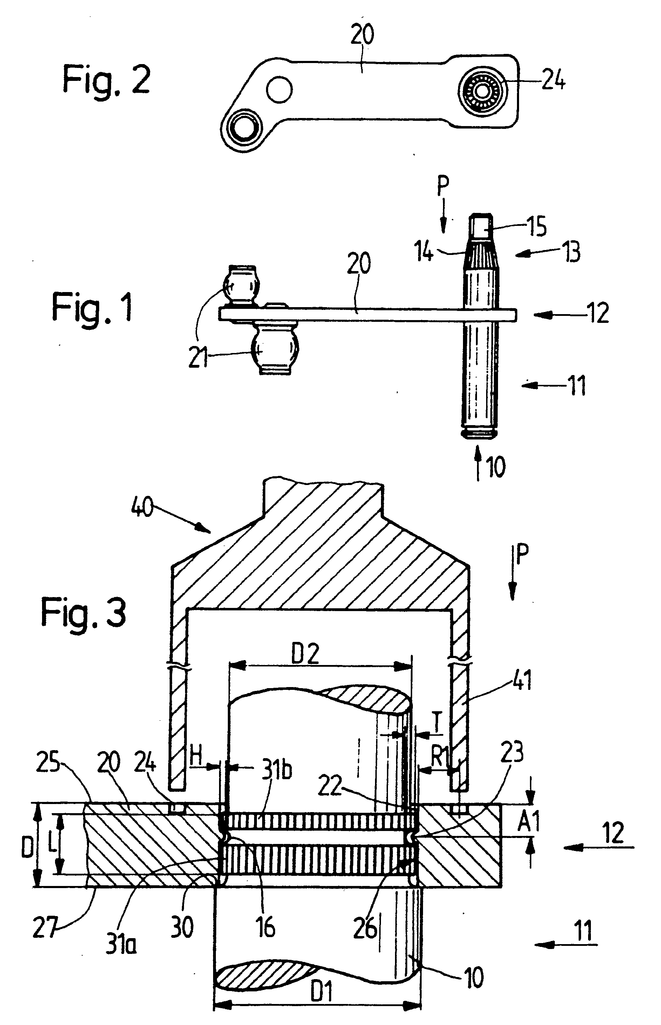

Die Erfindung bezieht sich im wesentlichen auf die Ausgestaltung der drehfesten Verbindung zwischen einem ersten Element, im vorliegenden Fall also dieser Wischerwelle 10 und dem Hebel 20, der — wie Fig. 1 zeigt — etwa mittig an dieser Wischerwelle 10 fixiert ist. Entsprechend befindet sich auch der Befestigungsbereich zwischen dem Lagerabschnitt 11 und dem Befestigungsabschnitt 13 für den Wischarm. Aus der stark vergrößerten Darstellung in Fig. 3 geht hervor, daß der Durchmesser D1 des Lagerabschnittes 11 der Wischerwelle 10 geringfügig größer ist als der Durchmesser D2 des Befestigungsbereiches 12. Auf diese Weise ist ein Auflageflansch 30 gebildet. Dieser Auflageflansch trennt also gewissermaßen den Lagerabschnitt 11 vom Befestigungsbereich 12 ab.

Der Befestigungsbereich 12 ist mit einer Rändelung 31 versehen, deren axiale Länge L kleiner ist als die Materialstärke D des Hebels 20. In Fig. 3 erkennt man zwei Rändelabschnitte 31a, 31b, die eine unterschiedliche axiale Länge aufweisen, wobei der an den Auflageflansch 30 angrenzende Abschnitt 31a etwa doppelt so lang ist wie der andere Abschnitt 31b. Zwischen diesen beiden gerändelten Abschnitten 31a, b ist in die Wischerwelle eine Ringnut 16 mit einem etwa halbkreisförmigen Querschnitt eingearbeitet. Diese Ringnut 16 wirkt mit einem Halteelement 23, das aus dem Hebel 20 herausgeformt ist, zusammen. Der Hebel 20 hat konzentrisch zur Wischerwelle 10 bzw. zu der Ausnehmung 22 im Hebel 20 eine ringförmige Aussparung 24 auf der einen Stirnseite 25, die durch ein Werkzeug 40 mit einem ringförmigen Prägestempel 41 hergestellt wurde.

Wenn dieser Prägestempel 41 an der einen Stirnseite 25 des Hebels 20 angesetzt und in Pfeilrichtung P verstellt wird, wird bei der Prägung dieser ringförmigen Aussparung 24 Material des Hebels derart verdrängt, daß der als Halteelement dienende Wulst 23 entsteht. Dieser Wulst 23 wird aus der die Ausnehmung 22 im Hebel 20 begrenzenden Mantelfläche 26 radial herausgedrückt und fließt in die Ringnut 16 an der Wischerwelle 10 hinein. Die Tiefe T dieser Ringnut 16 ist dabei größer als die Höhe H des Wulstes, gesehen in radialer Richtung, so daß die gewünschte Materialverdrängung nicht beeinträchtigt wird.

Insbesondere aus Fig. 3 geht also hervor, daß die Wischerwelle 10 im Befestigungsbereich 12 eine Ringnut 16 aufweist, in die ein aus dem Hebel 20 herausgeformtes Halteelement, nämlich der Wulst 23 eingreift. Dieser Wulst 23 ist dabei aus der die Ausnehmung 22 im Hebel begrenzenden Mantelfläche 26 herausgeformt und am fertigen Erzeugnis später nicht mehr sichtbar. Es ist eine großflächige Verriegelung in Achsrichtung zwischen Hebel 20 und Wischerwelle 10 geschaffen, weil dieser Wulst 23 ringförmig die Wischerwelle 10 umgreift. Der Wulst 23 liegt — entsprechend der axialen Ausdehnung der gerändelten Abschnitte 31a, b näher an der Stirnseite 25, an der das Werkzeug 40 angesetzt wird, als an der gegenüberliegenden Stirnseite 27, die am Auflageflansch 30 anliegt. Dadurch wird die gewünschte Materialverdrängung ohne übermäßigen Stempeldruck erreicht. Natürlich muß dabei darauf geachtet werden, daß der Prägestempel im richtigen Abstand zur Wischerwelle angesetzt wird. Umfangreiche Versuchsreihen haben ergeben, daß optimale Materialflußeigenschaften erzielt werden, wenn der axiale Abstand A1 des Wulstes 23 von der vom Prägestempel beaufschlagten Stirnseite 25 etwa dem radialen Abstand R1 zwischen der ringförmigen Aussparung 24 und dem Rand der Ausnehmung 22 im Hebel 20 entspricht.

Zur Herstellung des in der Zeichnung dargestellten Getriebeteils werden zunächst die Wischerwelle und der Hebel als separate Bauteile gefertigt. Dann wird die als Vollwelle ausgebildete Wischerwelle 10 mit ihrem Befestigungsbereich 12 in die Ausnehmung 22 am Hebel 20 eingepreßt, bis die eine Stirnseite 27 an dem Auflageflansch 30 an der Wischerwelle 10 anliegt. Anschließend wird von der anderen Stirnseite 25 her der Prägestempel 41 angesetzt, der in Achsrichtung der Wischerwelle 10, also in der Montagerichtung beim Zusammenfügen von Hebel 20 und Wischerwelle 10 wirkt und der die ringförmige Aussparung 24 in den Hebel 20 einarbeitet und durch entsprechende Materialverdrängung den radial in die Ringnut 16 der Wischerwelle 10 eindringenden Wulst 23 erzeugt. Damit ist dann ohne jeden weiteren Arbeitsgang eine allen Anforderungen gerecht werdende drehfeste Verbindung zwischen dem Hebel 20 und der Wischerwelle 10 geschaffen, die auch in axialer Richtung allen Belastungen standhält.

Bei dem in der Zeichnung dargestellten Ausführungsbeispiel liegt der Hebel 20 an einem Auflageflansch 30 der Wischerwelle 10 an. Versuche haben gezeigt, daß dies nicht unbedingt notwendig ist, denn die Stabilität des in die Ringnut der Wischerwelle eingreifenden Wulstes reicht zur axialen Lagesicherung durchaus aus. Insbesondere bei einer Ausführung ohne Auflageflansch könnte man die Wischerwelle mit zwei Ringnuten im Befestigungsbereich vorsehen, wobei dann von beiden Stirnseiten des Hebels her jeweils ein Wulst herausgeformt wird. Eine solche Lösung beitet sich insbesondere dann an, wenn die Materialstärke des Hebels ein bestimmtes Maß übersteigt und folglich eine ausreichend axiale Länge für die gerändelten Abschnitte zur Verfügung steht.

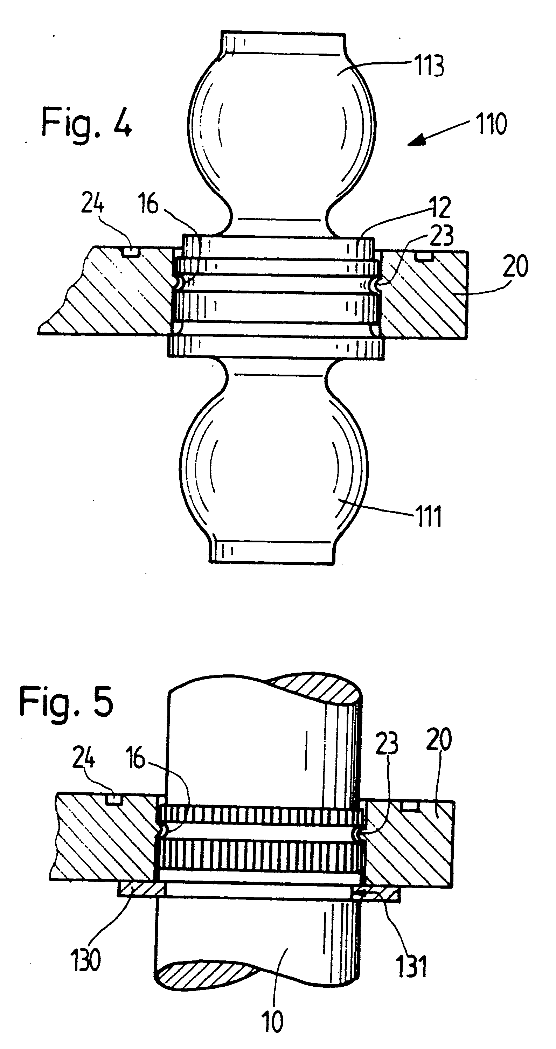

Fig. 4 zeigt ein anderes Ausführungsbeispiel der Erfindung, bei dem das erste Element ein Gelenkbolzen, nämlich ein Doppelkugelbolzen 110 ist, dessen Befestigungsbereich 12 zwischen den zwei angrenzenden Anlenkelementen 111 und 113 liegt. Diese Anlenkelemente 111 und 113 können also mit dem Befestigungsabschnitt 11 bzw. dem Lagerabschnitt 13 bei der Wischerwelle 10 insoweit verglichen werden, daß in beiden Fällen der Befestigungsbereich 12 zwischen zwei angrenzenden Abschnitten und nicht am Ende des ersten Elementes angeordnet ist. Hinsichtlich der erfindungsgemäßen Merkmalen mit einer Ringnut 16 sowie einem darin eingreifenden Wulst 23, der aus der Mantelfläche 26 am Hebel 20 herausgeformt ist, entspricht dieses Ausaführungsbeispiel genau der Ausführung nach den im einzelnen beschriebenen Fig. 1 bis 3 und es kann daher auf weitere Erläuterungen hier verzichtet werden. Allerdings ist eine Rändelung bei diesem Ausführungsbeispiel meist nicht notwendig, weil zwischen dem Gelenkbolzen und dem Hebel keine wesentlichen Drehmomente übertragen werden müssen.

Fig. 5 zeigt schließlich nochmals einen Teilschnitt durch eine Wischerwelle 10, wobei jetzt aber der Auflageflansch 30 durch ein Sicherungselement 130 ersetzt ist, das in einer Ringnut 131 der Wischerwelle 10 steckt. Die Wischerwelle kann daher absatzlos hergestellt werden. Im übrigen entspricht auch diese Ausführung hinsichtlich der erfindunswesentlichen Merkmale den zuvor beschriebenen Ausführungsbeispielen.

Abschließend wird noch darauf hingewiesen, daß man natürlich besondere Kostenvorteile erzielt, wenn an einem Hebel sowohl die Wischerwelle als auch der Gelenkbolzen auf die beschriebene Art verankert werden, also in der gleichen Montagerichtung fixiert werden.

**Patentansprüche**

1. Getriebeteil für eine Wischanlage von Kraftfahrzeugen mit einem ersten Element (10 ; 110) mit einem Betestigungsbereich (12) zwischen zwei daran angrenzenden Abschnitten (11, 13 ; 111, 133), wobei dieser Befestigungsbereich (12) gerändelt ist, eine Ringnut (16) aufweist und in einer entsprechenden Ausnehmung (22) eines Hebels (20) steckt, dadurch gekennzeichnet, daß in die Ringnut (16) von einer Stirnseite (25) des Hebels (20) aus als Halteelement (23) Material aus der die Ausnehmung (22) begrenzenden Mantelfläche (26) des Hebels (20) eingedrückt ist.

2. Getriebeteil nach Anspruch 1, dadurch gekennzeichnet, daß das erste Element eine Wischerwelle (10) ist, die einen Befestigungsabschnitt (13) für einen Wischarm und einen Lagerabschnitt (11) aufweist, wobei der Befestigungsbereich (12) zwischen dem Befestigungsabschnitt (13) und dem Lagerabschnitt (11) angeordnet ist.

3. Getriebeteil nach Anspruch 1, dadurch gekennzeichnet, daß das erste Element ein Gelenkbolzen, insbesondere ein Kugelgelenkbolzen (110) ist, der vorzugsweise beidseitig seines Befestigungsbereichs (12) Anlenkelemente (111, 113) für weitere Gelenkteile aufweist.

4. Getriebeteil nach einem der Ansprüche 1 bis 3, dadurch gekennzeichnet, daß das Halteelement (23) ein ringförmiger Wulst (23) ist.

5. Getriebeteil nach Anspruch 4, dadurch gekennzeichnet, daß der ringförmige Wulst (23) wenigstens annähernd radial in die Ringnut (16) der Wischerwelle (10) bzw. des Gelenkbolzens (110) eingreift.

6. Getriebeteil nach Anspruch 5, dadurch gekennzeichnet, daß der Hebel (20) an einer Stirnseite (25) konzentrisch zur Ausnehmung (22) eine ringförmige Aussparung (24) aufweist.

7. Getriebeteil nach Anspruch 6, dadurch gekennzeichnet, daß die Aussparung (24) durch ein axial an der einen Stirnseite (25) des Hebels (20) angesetztes Werkzeug (40) mit einem ringförmigen Prägestempel (41) gebildet ist und daß durch die Prägung dieser Aussparung (24) zur Bildung des Wulstes (23) Material aus der die Ausnehmung (22) begrenzenden Mantelfläche (26) herausgedrückt ist.

8. Getriebeteil nach Anspruch 7, dadurch gekennzeichnet, daß die Ringnut (16) einen wenigstens annähernd halbkreisförmigen Querschnitt aufweist.

9. Getriebeteil nach Anspruch 7, dadurch gekennzeichnet, daß die Tiefe (T) der Ringnut (16) größer ist als die radiale Ausdehnung (H) des Wulstes (23).

10. Getriebeteil nach Anspruch 7, dadurch gekennzeichnet, daß der axiale Abstand (A1) des Wulstes (23) von der vom Prägestempel (41) beaufschlagten Stirnseite (25) kleiner ist als der Abstand zur anderen Stirnseite (27).

11. Getriebeteil nach Anspruch 7, dadurch gekennzeichnet, daß der axiale Abstand (A1) des Wulstes (23) von der vom Prägestempel (41) beaufschlagten Stirnseite (25) etwa dem radialen Abstand (R1) zwischen der ringförmigen Aussparung (24) und dem Rand der Ausnehmung (22) im Hebel (20) entspricht.

12. Getriebeteil nach einem der vorherigen Ansprüche, dadurch gekennzeichnet, daß der Hebel (20) mit einer Stirnfläche (27) an einem Auflageflansch (30) oder an einem in einer Hut gehaltenen Sicherungselement (130) der Wischewelle (10) oder des Gelenkbolzens (110) anliegt.

13. Getriebeteil nach Anspruch 12, dadurch gekennzeichnet, daß der Auflageflansch (30) bzw. das Sicherungselement (130) zwischen Befestigungsbereich (12) und Lagerabschnitt (11) liegt.

14. Getriebeteil nach Anspruch 13, dadurch gekennzeichnet, daß der Durchmesser des Lagerabschnitts (11) der Wischewelle (10) größer ist als der Durchmesser des Befestigungsbereichs (12).

15. Getriebeteil nach Anspruch 6 und 12, dadurch gekennzeichnet, daß die ringförmige Aussparung (24) in die eine Stirnseite (25) des Hebels (20) eingearbeitet ist und der Hebel (20) mit der anderen Stirnseite (27) auf dem Auflageflansch (30) aufliegt.

16. Getriebeteil nach einem der vorhergehenden Ansprüche, dadurch gekennzeichnet, daß die Wischewelle (10) bzw. der Gelenkbolzen (110) vorzugsweise gehärtet ist und daß der gerändelte Bereich in die Ausnehmung (22) eingepreßt ist.

17. Getriebeteil nach Anspruch 16, dadurch gekennzeichnet, daß die Länge des gerändelten Befestigungsbereichs (12) kleiner ist als die Materialstärke des Hebels (20) und daß die Ringnut (16) in diesen gerändelten Bereich eingearbeitet ist.

18. Getriebeteil nach Anspruch 17, dadurch gekennzeichnet, daß der gerändelte Bereich (31) auf der einen Seite der Ringnut (16) eine wesentlich größere axiale Ausdehnung aufweist als auf der anderen Seite der Ringnut (16).

19. Getriebeteil nach Anspruch 17, dadurch gekennzeichnet, daß die axiale Ausdehnung (31a) auf der Seite zum Auflageflansch (30) mindestens doppelt so groß ist wie auf der anderen Seite (31b).

20. Getriebeteil nach einem der vorhergehenden Ansprüche, dadurch gekennzeichnet, daß die Wischerwelle bzw. der Gelenkbolzen im Befestigungsbereich zwei Ringnuten aufweist und in jede Ringnut ein aus dem Hebel herausgeförmter Wulst eingreift.

21. Verfahren zur Herstellung eines Getriebeteils nach einem der vorhergehenden Ansprüche, dadurch gekennzeichnet, daß die vorzugsweise als Vollwelle ausgebildete Wischerwelle (10, 110) bzw. der Gelenkbolzen mit dem Befestigungsbereich in eine Ausnehmung (22) am Hebel (20) eingesteckt, vorzugsweise eingepreßt wird, bis eine Stirnseite des Hebels an einem Auflageflansch bzw. einem Sicherungselement an der Wischerwelle bzw. dem Kugelbolzen anliegt, und daß anschließend an der anderen Stirnseite des Hebels ein Werkzeug (40) mit einem konzentrisch zur Wischerwelle bzw. dem Gelenkbolzen angeordneten Prägestempel (41) angesetzt wird, der in Achsrichtung der Wischerwelle bzw. des Gelenkbolzens eine ringförmige Aussparung (24) in den Hebel (20) einarbeitet und durch entsprechende Materialverdrängung einen radial in die Ringnut (16) der Wischerwelle bzw. des Gelenkbolzens eindringenden Wulst (23) erzeugt.

## Claims

1. A drive unit for a wiper system of motor vehicles comprising a first element (10 ; 110) with a fastening area (12) between two adjacent sections (11, 13 ; 111, 133), whereby this fastening area (12) is knurled, has a ring-groove (16) and is put into a corresponding aperture (22) of a crank arm (20), characterised in that as a holding element (23) material formed out of the outer surface (26) of the crank arm (20) is pressed into the ring-groove (16) from one front side (25) of the crank arm (20) limiting the aperture (22).

2. A drive unit according to claim 1, characterised in that the first element is a wiper shaft (10) comprising a fastening section (13) for a wiper arm and a bearing section (11), whereby the fastening area (12) is arranged between the fastening section (13) and the bearing section (11).

3. A drive unit according to claim 1, characterised in that the first element is a pivot pin, especially a ball pivot pin (110) comprising especially at both ends of its fastening area (12) linking elements (111, 113) for further linking parts.

4. A drive unit according to any one of claims 1 to 3, characterised in that the holding element (23) is a ring-like bulge (23).

5. A drive unit according to claim 4, characterised in that the ring-like bulge (23) engages at least approximately radially into the ring-groove (16) of the wiper shaft (10) or of the pivot pin (110).

6. A drive unit according to claim 5, characterised in that the crank arm (20) comprises a ring-like recess (24) concentrically to the aperture (22) at a front side (25).

7. A drive unit according to claim 6, characterised in that the recess (24) is formed by a tool (40) comprising a ring-like die (41) axially used at the front side (25) of the crank arm (20) and that by embossing this recess (24) marterial is pressed out of the outer surface (26) limiting the aperture (22) for forming the bulge (23).

8. A drive unit according to claim 7, characterised in that the ring-groove (16) has a cross-section which is at least approximately in the shape of a half-circle

9. A drive unit according to claim 7, characterised in that the depth (T) of the ring-groove (16) is bigger than the radial extension (H) of the bulge (23).

10. A drive unit according to claim 7, characterised in that the axial distance (A1) of the bulge (23) from the front side (25) acted upon by the die (41) is smaller than the distance from the other front side (27).

11. A drive unit according to claim 7, characterised in that the axial distance (A1) of the bulge (23) from the front side (25) acted upon by the die (41) corresponds more or less to the radial distance (R1) between the ring-like recess (24) and the edge of the aperture (22) in the crank arm (20).

12. A drive unit according to at least one of the preceding claims, characterised in that one front side (27) of the crank arm (20) lies on the arresting flange (30) or on a securing element (130) of the wiper shaft (10) held in a groove or on a securing element (130) of the pivot pin (110).

13. A drive unit according to claim 12, characterised in that the arresting flange (30) or the securing element (130) is between the fastening area (12) and the bearing section (11).

14. A drive unit according to claim 13, characterised in that the diameter of the bearing section (11) of the wiper shaft (10) is bigger than the diameter of the fastening area (12).

15. A drive unit according to claims 6 and 12, characterised in that the ring-like recess (24) is worked into one front side (25) of the crank arm (20) and the other front side (27) of the crank arm (20) lies on the arresting flange (30).

16. A drive unit according to one of the preceding claims, characterised in that the wiper shaft (10) or the pivot pin (110) is radially knurled in the fastening area (12) and preferably hardened and that this knurled area is pressed into the aperture (22).

17. A drive unit according to claim (16), characterised in that the length of the knurled fastening area (12) is smaller than the thickness of the crank arm (20) and that the ring-groove (16) is worked into this knurled area.

18. A drive unit according to claim 17, characterised in that the axial extension of the knurled area (31) is much bigger on one side of the ring-groove (16) than on the other side of the ring-groove (16).

19. A drive unit according to claim 17, characterised in that the axial extension (31a) on the side towards the arresting flange (30) is at least twice as big as on the other side (31b).

20. A drive unit according to at least one of the preceding claims, characterised in that the wiper shaft or the pivot pin comprise two ring-grooves in the fastening area and that-a bulge formed out of the crank arm engages into each ring-groove.

21. A method of manufacturing a drive unit according to one of the preceding claims, characterised in that the fastening area of the wiper shaft preferably formed as a solid shaft (10, 110) or of the pivot pin is inserted, preferably pressed, into an aperture (22) of the crank arm (20) until one front side of the crank arm lies on an arresting flange or on a securing element of the wiper shaft or of the pivot pin and that afterwards a tool (40) comprising a die (41) concentrically arranged with respect to the wiper shaft or the pivot pin is used at the other front side of the crank, which die makes a ring-like aperture (24) into the crank arm (20) in axial direction of the wiper shaft or of the pivot pin and creates a bulge (23) radially entering the ring-groove (16) of the wiper shaft or of the pivot pin by pushing the respective arterial aside.


## Revendications

1. Organe de transmission pour un système essuie-glace de véhicules automobiles, avec un premier élément (10 ; 110) qui présente une région de fixation (12) entre deux parties (11, 13 ; 111,113) qui lui sont contiguës, cette région de fixation (12) étant moletée, présentant une rainure annulaire (16) et s'insérant dans un évidement correspondant (22) d'un levier (20), caractérisé en ce que du matériau de la face latérale (26) du levier (20) qui délimite l'évidement (22) est enfoncé comme élément de retenue (23), à partir d'un côté frontal (25) du levier (20), dans la rainure annulaire (16).

2. Organe de transmission selon la revendication 1, caractérisé en ce que le premier élément est un arbre d'essuie-glace (10), qui présente une partie de fixation (13) pour un bras d'essuie-glace et une partie de palier (11), la région de fixation (12) étant disposée entre la partie de fixation (13) et la partie de palier (11).

3. Organe de transmission selon la revendication 1, caractérisé en ce que le premier élément est un goujon d'articulation, notamment un goujon d'articulation sphérique (110), qui présente de préférence de part et d'autre de sa région de fixation (12) des éléments d'articulation (111, 113) pour d'autres organes de transmission.

4. Organe de transmission selon l'une des revendications 1 à 3, caractérisé en ce que l'élément de retenue (23) est un bourrelet annulaire (23).

5. Organe de transmission selon la revendication 4, caractérisé en ce que le bourrelet annulaire (23) s'engage au moins approximativement radialement dans la rainure annulaire (16) de l'arbre d'essuie-glace (10) ou du goujon d'articulation (110).

6. Organe de transmission selon la revendication 5, caractérisé en ce que le levier (20) présente, sur un côté frontal (25), un creux (24) de forme annulaire, concentrique à l'évidement (22).

7. Organe de transmission selon la revendication 6, caractérisé en ce que le creux (24) est formé par un outil (40) mis en place axialement sur le côté frontal (25) du levier (20) et muni d'un poinçon d'emboutissage annulaire (40), et en ce qu'à la suite de l'emboutissage de ce creux (24), du matériau est exprimé de la face latérale (26) délimitant l'évidement (22) pour former le bourrelet (23).

8. Organe de transmission selon la revendication 7, caractérisé en ce que la rainure annulaire (16) présente une section au moins approximativement semi-circulaire.

9. Organe de transmission selon la revendication 7, caractérisé en ce que la profondeur (T) de la rainure annulaire (16) est supérieure à l'étendue radiale (H) du bourrelet (23).

10. Organe de transmission selon la revendication 7, caractérisé en ce que la distance axiale (A1) du bourrelet (23) à la face frontale (25) sollicitée par le poinçon d'emboutissage (41), est inférieure à sa distance à l'autre face frontale (27).

11. Organe de transmission selon la revendication 7, caractérisé en ce que la distance axiale (A1) du bourrelet (23) à la face frontale (25) sollicitée par le poinçon d'emboutissage (41), correspond approximativement à la distance radiale (R1) entre le creux annulaire (24) et le bord de l'évidement (22) dans le levier (20).

12. Organe de transmission selon l'une des revendications précédentes, caractérisé en ce que le levier (20) s'applique par une face frontale (27) contre une bride de support (30), ou contre un élément d'arrêt (130) maintenu dans une rainure, de l'arbre d'essuie-glace (10) ou du goujon d'articulation (110).

13. Organe de transmission selon la revendication 12, caractérisé en ce que la bride de support (30) ou l'élément d'arrêt (130) se trouve entre la région de fixation (12) et la partie de palier (11).

14. Organe de transmission selon la revendication 13, caractérisé en ce que le diamètre de la partie de palier (11) de l'arbre d'essuie-glane (10) est supérieur au diamètre de la région de fixation (12).

15. Organe de transmission selon les revendications 6 et 12, caractérisé en ce que le creux annulaire (24) est pratiqué dans un côté frontal (25) du levier (20), et le levier (20) repose par l'autre côté frontal (27) sur la bride de support (30).

16. Organe de transmission selon l'une des revendications précédentes, caractérisé en ce que l'arbre d'essuie-glane (10) ou le goujon d'articulation (110) est de préférence trempé, et en ce que la région moletée est emmanchée dans l'évidement (22).

17. Organe de transmission selon la revendication 16, caractérisé en ce que la longueur de la région de fixation moletée (12) est inférieure à l'épaisseur du matériau du levier (20), et en ce que la rainure annulaire (16) est pratiquée dans cette région moletée.

18. Organe de transmission selon la revendication 17, caractérisé en ce que la région moletée (31) présente une étendue axiale nettement supérieure sur un côté de la rainure annulaire (16) que sur l'autre côté de la rainure annulaire (16).

19. Organe de transmission selon la revendication 17, caractérisé en ce que l'étendue axiale (31a) sur le côté tourné vers la bride de support (30) est au moins le double de celle sur l'autre côté (31b).

20. Organe de transmission selon l'une des revendications précédentes, caractérisé en ce que l'arbre d'essuie-glace ou le goujon d'articulation présente deux rainures annulaires dans la région de fixation, et un bourrelet exprimé à partir du levier s'engage dans chaque rainure annulaire.

21. Procédé de fabrication d'un organe de transmission selon l'une des revendications précédentes, caractérisé en ce que l'arbre d'essuie-glace conçu de préférence comme arbre plein ou le goujon d'articulation (10, 110) est inséré, de préférence emmanché, par la région de fixation dans un évidement (22) prévu sur le levier (20), jusqu'à ce qu'un côté frontal du levier s'applique contre une bride de support ou un élément d'arrêt prévu sur l'arbre d'essuie-glace ou le goujon d'articulation, et en ce qu'un outil (40), muni d'un poinçon d'emboutissage (41) disposé concentriquement à l'arbre d'essuie-glane ou du goujon d'articulation, est ensuite mis en plane sur l'autre côté frontal du levier, le poinçon d'emboutissage (41) pratiquant dans le levier (20) un creux de forme annulaire (24) dans le sens axial de l'arbre d'essuie-glace ou du goujon d'articulation et produisant, par une compression de matériau correspondante, un bourrelet (23) pénétrant radialenent dans la rainure annulaire (16) de l'arbre d'essuie-glace ou du goujon d'articulation.

Fig. 2

20

24

P

20

Fig. 1

15
14        13

12

21

11

10

40

P

Fig. 3

D2

41

I
R1

25   20   24        H        31b        22                23

T

A1

D        L

12

27
31a        30        16        26

11

D1        10

Fig. 4

Fig. 5